# FASCICULE DE BREVET EUROPEEN

(11) **EP 1 068 437 B1**
(45) Date de publication et mention de la délivrance du brevet: **13.10.2004**
(21) Numéro de dépôt: 00900670.1
(22) Date de dépôt: 27.01.2000
(51) Int. Cl.: F02K 1/00

(54) **SYSTEME D'ACTIVATION DE TUYERE ORIENTABLE POUR PROPULSEUR A REACTION UTILISANT PLUSIEURS ENSEMBLES ELASTIQUES REPARTIS CIRCONFERENTIELLEMENT**
BETÄTIGUNGSVORRICHTUNG FÜR DIE SCHWENKBARE SCHUBDÜSE EINES STRAHLTRIEBWERKS MIT MEHREREN IN UMFANGSRICHTUNG VERTEILTEN ELASTISCHEN BAUTEILEN
SYSTEM FOR ACTIVATING A STEERABLE THRUST-VECTORING NOZZLE FOR A JET PROPULSION SYSTEM USING SEVERAL CIRCUMFERENTIALLY DISTRIBUTED ELASTIC ASSEMBLIES

(30) Priorité: 29.01.1999 FR 9901021
(43) Date de publication de la demande: 17.01.2001
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: ABBE, François, F-33127 Martignas (FR); CAMY, Pierre, F-33160 Saint Medard en Jalles (FR); HABAROU, Georges, F-33110 Le Bouscat (FR); THUAL, Michel, F-33290 Blanquefort (FR)
(74) Mandataire: Joly, Jean-Jacques
(86) Numéro de dépôt international: PCT/FR2000/000181
(87) Numéro de publication internationale: WO 2000/045039

(56) Documents cités:
- US-A- 3 504 903
- US-A- 4 363 445

## Description

### Domaine de l'invention

La présente invention concerne une tuyère orientable pour propulseur à réaction, c'est-à-dire une tuyère qui est capable d'orienter le jet d'un propulseur à réaction.

Cette tuyère, lorsqu'elle est montée sur un avion, permet au pilote de modifier rapidement le pilotage en tangage et lacet de l'avion (voire en roulis pour un bimoteur).

### Arrière-plan de l'invention

On connaît par la demande de brevet français FR-A-2 470 253 une tuyère orientable comprenant une partie fixe solidaire d'un propulseur, et une partie pivotante articulée sur la partie fixe et commandée par des vérins. Des ensembles d'éléments élastiques, régulièrement répartis autour de la circonférence de la tuyère et disposés, dans chaque ensemble, parallèlement à l'axe longitudinal de la partie fixe, assurent le centrage et le maintien de la partie pivotante par rapport à la partie fixe. Chacun de ces ensembles est constitué d'un élément élastique fixe, dont la base est solidaire de la partie fixe et l'extrémité opposée est solidaire d'une virole intermédiaire, et d'un élément élastique mobile, dont la base est solidaire de la partie pivotante et l'extrémité opposée est solidaire de la virole intermédiaire.

Lorsque la partie pivotante est dans une position autre que la position neutre, c'est-à-dire lorsque le jet issu du propulseur est dévié en sortie de la tuyère par rapport à l'axe longitudinal de la partie fixe, chaque ensemble d'éléments élastiques subit une déformation qui a pour effet soit d'écarter les bases des éléments élastiques soit de les rapprocher. Dans une position extrême, la base de l'élément élastique mobile vient buter contre la base de l'élément élastique fixe, ce qui limite le débattement de la partie mobile.

### Objet et résumé de l'invention

La présente invention vise à fournir une tuyère orientable dans laquelle, à encombrement égal des moyens élastiques de centrage et de maintien de la partie pivotante, un plus grand débattement de la partie pivotante peut être obtenu.

A cette fin, il est prévu selon l'invention une tuyère orientable pour propulseur à réaction, comprenant une partie fixe destinée à être fixée au propulseur, une partie mobile articulée sur la partie fixe, un moyen de commande pour commander la partie mobile, et un ou plusieurs ensembles élastiques disposés entre la partie fixe et la partie mobile, chaque ensemble élastique comprenant :
au moins un plot élastique fixe, dont une première extrémité est solidaire de la partie fixe et une second extrémité, opposée à la première extrémité, est solidaire d'une pièce rigide, et
au moins un plot élastique mobile, dont une première extrémité est solidaire de la partie mobile et une second extrémité, opposée à la première extrémité, est solidaire de ladite pièce rigide, caractérisée en ce que
ledit au moins un plot élastique fixe et ledit au moins un plot élastique mobile sont décalés l'un par rapport à l'autre dans une direction circonférentielle de la tuyère.

Ainsi, selon l'invention, le ou les plots élastiques mobiles sont décalés par rapport au(x) plot(s) élastique(s) fixe(s) dans une direction circonférentielle, c'est-à-dire qu'aucun plot élastique mobile n'est en regard d'un plot élastique fixe dans une direction axiale de la tuyère. En position neutre, ou de repos, de la partie mobile, le ou les plots élastiques mobiles sont disposés en aval des plots élastiques fixes suivant la direction axiale. Dans une position extrême, la première extrémité de chaque plot élastique mobile vient au moins au même niveau que la première extrémité du ou des plots élastiques fixes suivant la direction axiale, et, lorsque plusieurs plots élastiques fixes et plusieurs plots élastiques mobiles sont prévus, les premières extrémités respectives des plots élastiques mobiles s'intercalent entre les premières extrémités respectives des plots élastiques fixes. De cette manière, pour un même encombrement de l'ensemble élastique, la course du ou des plots élastiques mobiles est augmentée, de sorte que le débattement de la partie mobile de la tuyère est également augmentée.

Selon une réalisation particulière de l'invention, chaque ensemble élastique comprend deux plots élastiques fixes et un plot élastique mobile positionné, dans la direction circonférentielle de la tuyère, entre les deux plots élastiques fixes. La pièce rigide est en forme de V, la pointe du V étant fixée au plot élastique mobile et les deux autres extrémités du V étant fixées respectivement aux plots élastiques fixes.

Selon une autre réalisation de l'invention, chaque ensemble élastique comprend deux plots élastiques mobiles et un plot élastique fixe positionné, dans la direction circonférentielle de la tuyère, entre les deux plots élastiques mobiles. La pièce rigide est en forme de V, la pointe du V étant fixée au plot élastique fixe et les deux autres extrémités du V étant fixées respectivement aux plots élastiques mobiles.

Typiquement, la partie mobile est articulée sur la partie fixe par des moyens formant rotule, qui comprennent une portée sphérique fixe et une portée sphérique mobile glissant sur la portée sphérique fixe. La portée sphérique mobile est reliée au moyen de commande. En outre, la première extrémité du ou des plots élastiques fixes est fixée sur la portée sphérique fixe, et la première extrémité du ou des plots élastiques mobiles est fixée sur la portée sphérique mobile. Plus particulièrement, le ou les plots élastiques mobiles sont chacun fixés sur une saillie de la portée sphérique mobile, ladite saillie ayant une forme et une taille lui permettant de s'interposer entre deux plots élastiques fixes.

Le moyen de commande utilisé pour commander les déplacements de la partie mobile par rapport à la partie fixe comprend de préférence des vérins répartis régulièrement sur la circonférence de la tuyère.

De préférence, les plots élastiques fixe(s) et mobile(s) sont conçus en un matériau lamifié, capable de résister à la température régnant dans la tuyère. Le matériau lamifié est constitué d'un empilement de couches alternativement en élastomère et en métal, d'un empilement de couches alternativement en élastomère et en un matériau composite organique, ou d'un empilement de couches alternativement en élastomère et en un matériau thermo-structural. L'élastomère est choisi parmi les élastomères capables de supporter des températures supérieures à 150°C. On utilise par exemple un élastomère choisi parmi les matériaux fluoro-carbonés et fluoro-silicones, et les élastomères hydrogénés tels que HNBR ("Hydrogenated Nitrile Butadiene Rubber").

La tuyère selon l'invention peut en outre comprendre des volets orientables, solidaires de la partie mobile. Les volets orientables constituent par exemple un ensemble convergent-divergent. Dans ce cas, l'orientation des volets est notamment utilisée pour modifier le diamètre du col de la tuyère, c'est-à-dire le diamètre de la section définie transversalement entre les volets convergents et les volets divergents de l'ensemble convergent-divergent.

### Brève description des dessins

D'autres caractéristiques et avantages de la présente invention apparaîtront à la lecture de la description détaillée suivante de plusieurs modes de réalisation, faite en référence aux dessins annexés dans lesquels:
- la figure 1 est une demi-vue en coupe schématique d'une tuyère orientable selon une première réalisation de la présente invention;
- la figure 2 est une vue de dessus d'une partie de la tuyère illustrée à la figure 1;
- les figures 3 et 4 sont des demi-vues en coupe de la tuyère illustrée à la figure 1, montrant deux orientations différentes d'une partie mobile de la tuyère; et
- la figure 5 est une vue de dessus d'une partie d'une tuyère selon un second mode de réalisation de la présente invention.

### Description détaillée de modes de réalisation préférés

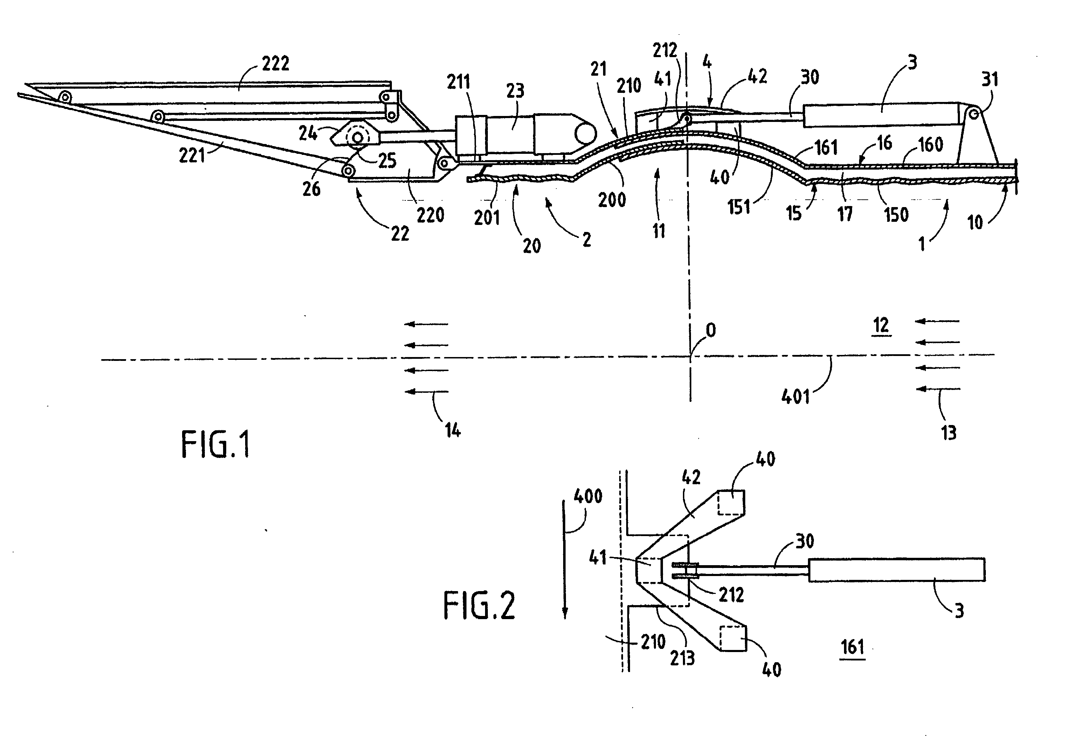

La figure 1 montre schématiquement une tuyère orientable conforme à la présente invention. La tuyère comprend, de manière générale, une partie fixe 1 qui est solidaire, en une extrémité amont 10, d'un propulseur à réaction (non représenté), et une partie mobile pivotante 2 qui est articulée sur une extrémité aval 11 de la partie fixe 1.

La partie fixe 1 comprend un canal d'éjection 12 qui reçoit les gaz produits par le propulseur et les éjecte à travers la partie pivotante 2, comme indiqué par les flèches 13 et 14 sur la figure 1. Le canal d'éjection 12 est délimité par une chemise interne 15, constituée par une partie cylindrique ondulée 150 prolongée en aval par une portée sphérique 151. Une paroi externe 16, de même forme que la chemise interne 15, définit avec cette dernière un espace de refroidissement 17 dans lequel circule un fluide de refroidissement approprié. La paroi externe 16 de la partie fixe 1 se compose d'une partie cylindrique 160 et d'une portée sphérique 161, disposées respectivement en vis-à-vis de la partie cylindrique 150 et de la portée sphérique 151.

La partie mobile 2 comprend une chemise interne 20, constituée par une portée sphérique 200 prolongée en aval par une partie cylindrique ondulée 201, et disposée en regard d'une paroi externe correspondante 21 constituée par une portée sphérique 210 et une partie cylindrique 211. La chemise interne 20 et la paroi externe 21 sont solidaires l'une de l'autre. L'espace défini entre la chemise interne 20 et la paroi externe 21 prolonge l'espace de refroidissement précité 17. La partie mobile 2 comprend également un ensemble annulaire de volets orientables 22, qui sera détaillé plus loin.

Les portées sphériques 151, 161, 200 et 210 ont un centre commun représenté par le point O sur la figure 1. Ces portées sphériques sont agencées de manière à former une rotule qui articule la partie mobile 2 sur la partie fixe 1 de la tuyère. Plus précisément, les portées sphériques mobiles 200 et 210 glissent, respectivement, sur les portées sphériques fixes 151 et 161 sous la commande d'un ou plusieurs vérins hydrauliques ou électriques 3, ce qui oriente la partie mobile pivotante 2 par rapport à la partie fixe 1. Les vérins 3 sont régulièrement répartis sur la circonférence de la tuyère. En pratique, on utilise de préférence au moins trois vérins disposés selon des angles de 120° sur la circonférence de la tuyère. Chaque vérin 3 comporte une tige 30 dont l'extrémité libre est fixée à une patte 212 de la portée sphérique mobile externe 210. Chaque vérin 3 est par ailleurs articulé, en une extrémité amont 31, sur la partie fixe 1. Les fonctionnements respectifs des différents vérins sont synchronisés d'une manière connue de l'homme du métier.

Conformément à la présente invention, des ensembles élastiques 4 sont régulièrement disposés sur la circonférence de la tuyère, entre la partie fixe 1 et la partie mobile 2. Selon un premier mode de réalisation représenté aux figures 1 et 2, chaque ensemble élastique 4 comprend deux plots élastiques fixes 40, un plot élastique mobile 41 et une pièce rigide 42. Les plots élastiques fixes 40 ont chacun une première face, appelée "base", qui est fixée à la partie fixe 1 de la tuyère, et plus particulièrement sur la portée sphérique fixe externe 161, et une seconde face, opposée à la première face, qui est fixée à la pièce rigide 4. Le plot élastique 41 a une première face qui est fixée à la partie mobile 2 de la tuyère, et plus particulièrement sur une saillie 213 à l'extrémité de laquelle se trouve une patte de fixation 212, et une seconde face, opposée à la première face, qui est fixée à la pièce rigide 42. La fixation des faces précitées aux parties fixe et mobile 1, 2 et à la pièce rigide 42 est typiquement réalisée par collage et/ou assemblage. Les plots élastiques sont de préférence conçus en un matériau lamifié, c'est-à-dire en un matériau constitué par un empilement de couches d'élastomère intercalées entre des armatures. Dans la présente invention, L'élastomère est choisi parmi les élastomères capables de supporter des températures supérieures à 150°C. On utilise par exemple un élastomère choisi parmi les matériaux fluoro-carbonés et fluoro-silicones, et les élastomères hydrogénés tels que HNBR ("Hydrogenated Nitrile Butadiene Rubben"). Les armatures sont de préférence conçues en métal, en un matériau composite organique ou en un matériau thermo-structural tel qu'un matériau composite carbone-carbone ou un matériau composite à matrice céramique.

Comme illustré aux figures 1 et 2, la pièce rigide 42 a un profil sensiblement sphérique, et se présente sous la forme d'un V dont la pointe est fixée au plot élastique mobile 41 et les deux autres extrémités sont fixées respectivement aux plots élastiques fixes 40. Les plots élastiques fixes 40 sont alignés suivant une direction circonférentielle, représentée par la flèche 400 à la figure 2, orthogonale à un axe longitudinal 401 de la partie fixe 1 de la tuyère. En position neutre de la tuyère, c'est-à-dire lorsque la partie mobile 2 est dans l'alignement de la partie fixe 1 comme montré à la figure 1, la saillie 213 et le plot associé 41 sont décalés par rapport aux plots élastiques fixes 40 suivant la direction circonférentielle 400. De manière plus précise, la saillie 213 et le plot associé 41 sont positionnés, suivant la direction circonférentielle 400, entre les plots élastiques fixes 40, et, parallèlement à l'axe longitudinal 401, en aval des plots élastiques fixes 40.

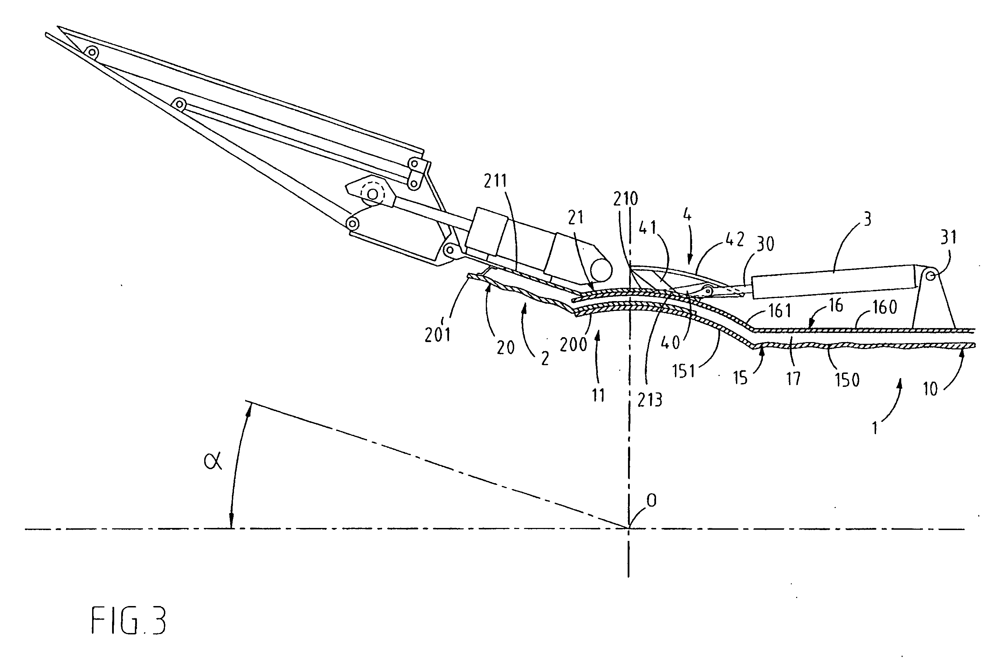

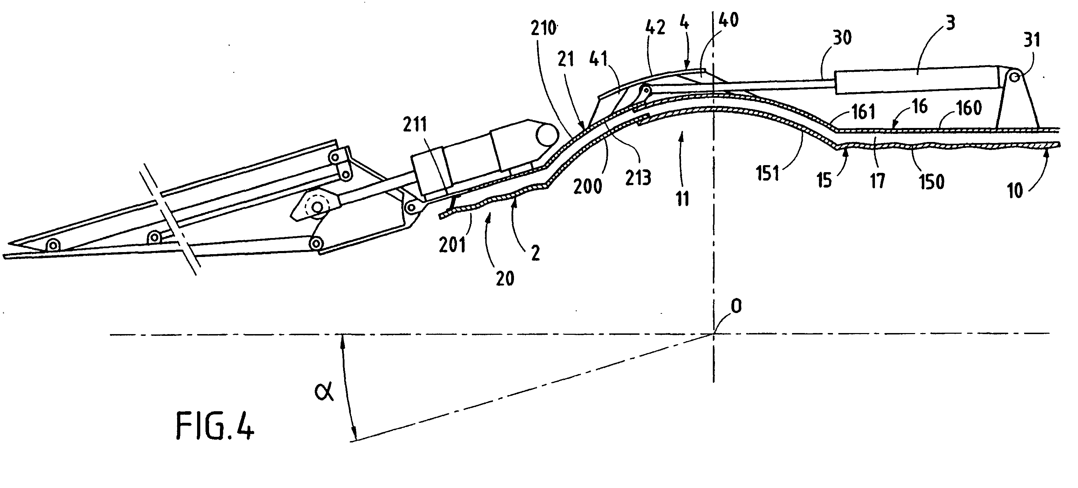

Les figures 3 et 4 illustrent la configuration de la tuyère lorsque la partie mobile 2 est orientée vers le haut ou vers le bas. Les figures 3 et 4 montrent plus particulièrement deux configurations extrêmes d'un ensemble élastique 4.

A la figure 3, lorsque le vérin 3 est activé de manière que la tige 30 rentre dans le cylindre, la saillie 213 de la portée sphérique mobile 210 est tirée vers les plots élastiques fixes 40. En position extrême, la saillie 213 et la base du plot élastique mobile 41 sont sensiblement alignées avec les bases respectives des plots élastiques fixes 40 et interposées entre ces dernières. Les plots élastiques fixes et mobile 40, 41 subissent une déformation, comme illustré à la figure 3. Ainsi, selon la présente invention, le fait que le plot élastique mobile 41 soit décalé par rapport à chaque plot élastique fixe 40 suivant la direction circonférentielle 400 permet d'amener la base du plot élastique mobile 41 au moins au même niveau que les bases respectives des plots élastiques fixes 40 et d'éviter que la base du plot élastique 41 vienne buter contre l'une ou l'autre des bases des plots élastiques fixes 40. Par rapport au système de la technique antérieure consistant à utiliser deux plots élastiques qui butent l'un contre l'autre en position extrême, l'ensemble élastique 4 selon la présente invention autorise, à encombrement égal, un plus grand débattement α de la partie mobile 2, ou présente, à débattement α égal, un encombrement axial réduit. Par ailleurs, la forme générale en V de l'ensemble élastique 4 permet de centrer et maintenir la partie mobile 2 par rapport à la partie fixe 1 avec une meilleure stabilité.

Lorsque le vérin 3 est activé de manière que la tige 30 sorte du cylindre, la saillie 213 de la portée sphérique mobile 210 et le plot élastique mobile associé 41 sont éloignés des plots élastiques fixes 40, comme le montre la figure 4.

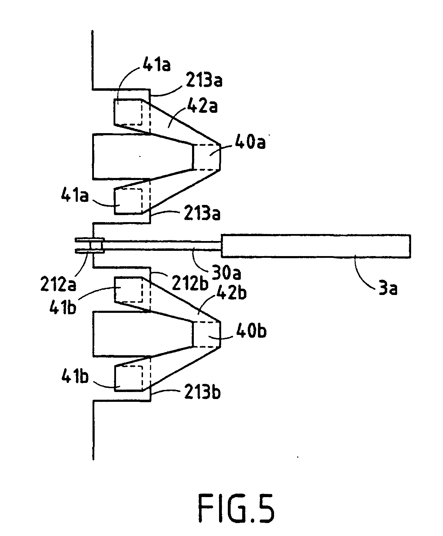

La figure 5 illustre un second mode de réalisation de la présente invention, dans lequel chaque ensemble élastique comprend deux plots élastiques mobiles et un plot élastique fixe. Sur la figure 5, deux ensembles élastiques sont représentés, à savoir un ensemble 40a-41 a-42a et un ensemble 40b-41 b-42b. L'ensemble 40a-41 a-42a comprend deux plots élastiques mobiles 41 a fixés sur des saillies respectives 213a de la portée sphérique mobile, et un plot élastique fixe 40a fixé sur la portée sphérique fixe, les plots 41a et 40a étant reliés entre eux par une pièce en forme de V 42a. L'ensemble 40b-41b-42b comprend deux plots élastiques mobiles 41 b fixés sur des saillies respectives 213b de la portée sphérique mobile, et un plot élastique fixe 40b fixé sur la portée sphérique fixe, les plots 41 b et 40b étant reliés entre eux par une pièce en forme de V 42b. Un ensemble de vérins, tel que le vérin 3a positionné entre deux ensembles élastiques déplace les plots élastiques mobiles, de la même manière que dans le premier mode de réalisation.

Dans l'un et l'autre des deux modes de réalisation décrits ci avant, le nombre d'ensembles élastiques disposés régulièrement sur la circonférence de la tuyère est de préférence au moins égal à 3.

Comme déjà indiqué, la tuyère selon la présente invention peut comporter également un ensemble annulaire de volets 22 (cf. figure 1). L'ensemble annulaire de volets 22 est solidaire des portées sphériques mobiles 210 et 201. Sa structure est connue de l'homme du métier. De manière générale, l'ensemble 22 comprend une pluralité de structures adjacentes montées circulairement sur une extrémité aval de la paroi cylindrique 211. Chacune de ces structures comprend un volet convergent 220, un volet divergent 221 et un volet secondaire 222, dit également "volet froid". Une structure de ce type est décrite dans la demande de brevet français FR-A-2 561 313. Un système d'activation comprend des vérins 23 (dont un est représenté à la figure 1) régulièrement répartis sur la circonférence de la tuyère, un anneau 24 ayant comme axe de symétrie l'axe longitudinal 401 de la tuyère et dans lequel sont disposés des galets 25, et des surfaces de came 26 sur lesquelles les galets 25 sont déplacés, ce système d'activation permet de modifier l'orientation des volets convergents 220 et des volets divergents 221, afin de modifier le diamètre du col de la tuyère et, de façon liée, le diamètre de sortie du divergent de la tuyère.

La présente invention telle que décrite ci-dessus n'est pas limitée au nombre particulier de plots élastiques utilisés pour chaque ensemble élastique dans les différents modes de réalisation exposés. Il apparaîtra clairement à l'homme du métier qu'un nombre différent de plots élastiques fixe(s) et mobile(s) peuvent être prévus, pour autant que, en position neutre de la partie mobile, chaque plot élastique mobile soit décalé par rapport à chaque plot élastique fixe dans une direction circonférentielle de la tuyère, de telle sorte qu'en position extrême, la base de chaque plot mobile puisse venir se placer, dans une direction axiale de la tuyère, au moins au même niveau que la base d'un plot élastique fixe. En outre, bien que l'utilisation de plusieurs plots élastiques fixes et/ou de plusieurs plots élastiques mobiles améliore la stabilité, il est possible également de n'utiliser qu'un seul plot élastique fixe et un seul plot élastique mobile pour concevoir chaque ensemble élastique.

## Revendications

1. Tuyère orientable pour propulseur à réaction, comprenant une partie fixe (1) destinée à être fixée au propulseur, une partie mobile (2) articulée sur la partie fixe, un moyen de commande (3) pour commander la partie mobile, et un ou plusieurs ensembles élastiques (4) disposés entre la partie fixe et la partie mobile, chaque ensemble élastique comprenant :
au moins un plot élastique fixe (40), dont une première extrémité est solidaire de la partie fixe et une second extrémité, opposée à la première extrémité, est solidaire d'une pièce rigide (42), et
au moins un plot élastique mobile (41), dont une première extrémité est solidaire de la partie mobile et une second extrémité, opposée à la première extrémité, est solidaire de ladite pièce rigide, **caractérisée en ce que**
ledit au moins un plot élastique fixe et ledit au moins un plot élastique mobile sont décalés l'un par rapport à l'autre dans une direction circonférentielle (400) de la tuyère.

2. Tuyère orientable selon la revendication 1, **caractérisée en ce que** ledit au moins un plot élastique fixe comprend deux plots élastiques fixes (40), et ledit au moins un plot élastique mobile comprend un plot élastique mobile (41) positionné, dans une direction circonférentielle (400) de la tuyère, entre les deux plots élastiques fixes.

3. Tuyère orientable selon la revendication 2, **caractérisée en ce que** la pièce rigide (42) est en forme de V, la pointe du V étant fixée au plot élastique mobile (41) et les deux autres extrémités du V étant fixées respectivement aux plots élastiques fixes (40).

4. Tuyère orientable selon la revendication 1, **caractérisée en ce que** ledit au moins un plot élastique mobile comprend deux plots élastiques mobiles (41 a), et ledit au moins un plot élastique fixe comprend un plot élastique fixe (40a) positionné, dans une direction circonférentielle (400) de la tuyère, entre les deux plots élastiques mobiles.

5. Tuyère orientable selon la revendication 4, **caractérisée en ce que** la pièce rigide (42a) est en forme de V, la pointe du V étant fixée au plot élastique fixe (40a) et les deux autres extrémités du V étant fixées respectivement aux plots élastiques mobiles (41 a).

6. Tuyère orientable selon l'une quelconque des revendications 1 à 5, **caractérisée en ce que** ledit au moins un plot élastique fixe (40) et ledit au moins un plot élastique mobile (41) sont conçus en un matériau lamifié.

7. Tuyère orientable selon la revendication 6, **caractérisée en ce que** le matériau lamifié est constitué d'un empilement de couches alternativement en élastomère et en métal.

8. Tuyère orientable selon la revendication 6, **caractérisée en ce que** le matériau lamifié est constitué d'un empilement de couches alternativement en élastomère et en un matériau composite organique.

9. Tuyère orientable selon la revendication 6, **caractérisée en ce que** le matériau lamifié est constitué d'un empilement de couches alternativement en élastomère et en un matériau thermo-structural.

10. Tuyère orientable selon l'une quelconque des revendications 7 à 9, **caractérisée en ce que** l'élastomère est choisi parmi les élastomères capables de supporter des températures supérieures à 150°C.

11. Tuyère orientable selon la revendication 10, **caractérisée en ce que** l'élastomère est choisi parmi les matériaux fluoro-carbonés et fluoro-silicones, et les élastomères hydrogénés.

12. Tuyère orientable selon l'une quelconque des revendications 1 à 11, **caractérisée en ce que** la partie mobile (2) est articulée sur la partie fixe (1) par des moyens (161,210,151,200) définissant un centre de rotation.

13. Tuyère orientable selon la revendication 12, **caractérisée en ce que** les moyens définissant un centre de rotation comprennent une portée sphérique fixe (161) et une portée sphérique mobile (210) glissant sur la portée sphérique fixe, et **en ce que** la portée sphérique mobile est reliée au moyen de commande (3).

14. Tuyère orientable selon la revendication 13, **caractérisée en ce que** la première extrémité dudit au moins un plot élastique fixe (40) est fixée sur la portée sphérique fixe (161), et la première extrémité dudit au moins un plot élastique mobile (41) est fixée sur la portée sphérique mobile (210).

15. Tuyère orientable selon la revendication 14, **caractérisée en ce que** le ou les plots élastiques mobiles (41) sont chacun fixés sur une saillie (213) de la portée sphérique mobile (210), ladite saillie ayant une forme et une taille lui permettant de s'interposer entre deux plots élastiques fixes (40).

16. Tuyère orientable selon l'une quelconque des revendications 1 a 15, **caractérisée en ce que** le moyen de commande comprend des vérins (3) qui sont de préférence régulièrement répartis sur la circonférence de la tuyère.

17. Tuyère orientable selon l'une quelconque des revendications 1 à 16, **caractérisée en ce que** lesdits ensembles élastiques (4) sont répartis régulièrement sur la circonférence de la tuyère.

18. Tuyère orientable selon l'une quelconque des revendications 1 à 17, **caractérisée en ce qu'**elle comprend en outre des volets orientables (22), solidaires de la partie mobile (2).

## Patentansprüche

1. Schwenkbare Schubdüse für ein Strahltriebwerk, umfassend einen festen Teil (1), der dazu bestimmt ist, am Triebwerk befestigt zu werden, einen beweglichen Teil (2), der an dem festen Teil angelenkt ist, ein Steuermittel (3), um den beweglichen Teil zu steuern, und einen oder mehrere elastische Bauteile (4), die zwischen dem festen Teil und dem beweglichen Teil angeordnet sind, wobei jeder elastische Bauteil umfasst:
mindestens ein festes elastisches Stück (40), dessen erstes Ende fest mit dem festen Teil verbunden ist, und dessen zweites Ende, das dem ersten Ende gegenüberliegt, fest mit einem starren Teil (42) verbunden ist, und
mindestens ein bewegliches elastisches Stück (41), dessen erstes Ende fest mit dem beweglichen Teil verbunden ist, und dessen zweites Ende, das dem ersten Ende gegenüber liegt, fest mit dem starren Teil verbunden ist,
**dadurch gekennzeichnet,**
**dass** das mindestens eine feste elastische Stück und das mindestens eine bewegliche elastische Stück zueinander in einer Umfangsrichtung (400) der Schubdüse versetzt sind.

2. Schwenkbare Schubdüse nach Anspruch 1, **dadurch gekennzeichnet, dass** das mindestens eine feste elastische Stück zwei feste elastische Stücke (40) umfasst, und das mindestens eine bewegliche elastische Stück ein bewegliches elastisches Stück (41) umfasst, das in einer Umfangsrichtung (400) der Schubdüse zwischen beiden festen elastischen Stücken positioniert ist.

3. Schwenkbare Schubdüse nach Anspruch 2, **dadurch gekennzeichnet, dass** der starre Teil (42) V-Form besitzt, wobei die Spitze des V am beweglichen elastischen Stück (41) und die beiden anderen Enden des V jeweils an den festen elastischen Stücken (40) befestigt sind.

4. Schwenkbare Schubdüse nach Anspruch 1, **dadurch gekennzeichnet, dass** das mindestens eine bewegliche elastische Stück zwei bewegliche elastische Stücke (41 a) umfasst und das mindestens eine feste elastische Stück ein festes elastisches Stück (40a) umfasst, das in einer Umfangsrichtung (400) der Schubdüse zwischen den beiden beweglichen elastischen Stücken positioniert ist.

5. Schwenkbare Schubdüse nach Anspruch 4, **dadurch gekennzeichnet, dass** der starre Teil (42a) V-Form besitzt, wobei die Spitze des V am festen elastischen Stück (40a) und die beiden anderen Enden des V jeweils an den beweglichen elastischen Stücken (41 a) befestigt sind.

6. Schwenkbare Schubdüse nach einem der Ansprüche 1 bis 5, **dadurch gekennzeichnet, dass** das mindestens eine feste elastische Stück (40) und das mindestens eine bewegliche elastische Stück (41) aus einem aus mehreren Schichten bestehenden Material bestehen.

7. Schwenkbare Schubdüse nach Anspruch 6, **dadurch gekennzeichnet, dass** das aus mehreren Schichten bestehende Material aus einer Übereinanderschichtung von abwechselnden Schichten aus Elastomer und aus Metall gebildet ist.

8. Schwenkbare Schubdüse nach Anspruch 6, **dadurch gekennzeichnet, dass** das aus mehreren Schichten bestehende Material aus einer Übereinanderschichtung von abwechselnden Schichten aus Elastomer und einem organischen Verbundstoff gebildet ist.

9. Schwenkbare Schubdüse nach Anspruch 6, **dadurch gekennzeichnet, dass** das aus mehreren Schichten bestehende Material aus einer Übereinanderschichtung von abwechselnden Schichten aus Elastomer und einem Thermostrukturmaterial gebildet ist.

10. Schwenkbare Schubdüse nach einem der Ansprüche 7 bis 9, **dadurch gekennzeichnet, dass** das Elastomer aus den Elastomeren ausgewählt ist, die gegen Temperaturen von mehr als 150 °C beständig sind.

11. Schwenkbare Schubdüse nach Anspruch 10, **dadurch gekennzeichnet, dass** das Elastomer aus den Fluorkarbon- und Fluorsilikonstoffen und den wasserstoffhaltigen Elastomeren ausgewählt ist.

12. Schwenkbare Schubdüse nach einem der Ansprüche 1 bis 11, **dadurch gekennzeichnet, dass** der bewegliche Teil (2) auf dem festen Teil (1) durch Mittel (161, 210,151, 200) angelenkt ist, die einen Drehmittelpunkt definieren.

13. Schwenkbare Schubdüse nach Anspruch 12, **dadurch gekennzeichnet, dass** die Mittel, die einen Drehmittelpunkt definieren, einen festen Kugelbereich (161) und einen beweglichen Kugelbereich (210), der auf dem festen Kugelbereich gleitet, umfassen, und dass der bewegliche Kugelbereich mit dem Steuermittel (3) verbunden ist.

14. Schwenkbare Schubdüse nach Anspruch 13, **dadurch gekennzeichnet, dass** das erste Ende des mindestens einen festen elastischen Stücks (40) auf dem festen Kugelbereich (161) befestigt ist, und das erste Ende des mindestens einen beweglichen elastischen Stücks (41) auf dem beweglichen Kugelbereich (210) befestigt ist.

15. Schwenkbare Schubdüse nach Anspruch 14, **dadurch gekennzeichnet, dass** das oder die beweglichen elastischen Stück(e) (41) jeweils auf einem Vorsprung (213) des beweglichen Kugelbereichs (210) befestigt ist/sind, wobei der Vorsprung eine Form und Größe aufweist, die es ihm ermöglichen, zwischen zwei festen elastischen Stücken (40) angeordnet zu werden.

16. Schwenkbare Schubdüse nach einem der Ansprüche 1 bis 15, **dadurch gekennzeichnet, dass** das Steuermittel Zylinder (3) umfasst, die vorzugsweise regelmäßig am Umfang der Schubdüse verteilt sind.

17. Schwenkbare Schubdüse nach einem der Ansprüche 1 bis 16, **dadurch gekennzeichnet, dass** die elastischen Bauteile (4) regelmäßig auf dem Umfang der Schubdüse verteilt sind.

18. Schwenkbare Schubdüse nach einem der Ansprüche 1 bis 17, **dadurch gekennzeichnet, dass** sie ferner ausrichtbare Klappen (22) umfasst, die mit dem beweglichen Teil (2) verbunden sind.

## Claims

1. A steerable nozzle for a reaction engine, the nozzle comprising a fixed portion (1) for fixing to the engine, a moving portion (2) hinged to the fixed portion, control means (3) for controlling the moving portion, and one or more resilient assemblies (4) disposed between the fixed portion and the moving portion, each resilient assembly comprising:
at least one fixed resilient stud (40) having a first end secured to the fixed portion and a second end, opposite from the first end, secured to a rigid piece (42), and
at least one moving resilient stud (41) having a first end secured to the moving portion and a second end, opposite from the first end, secured to said rigid piece, the nozzle being **characterised in that**
said at least one fixed resilient stud and said at least one moving resilient stud are offset relative to each other in a circumferential direction (400) of the nozzle.

2. A steerable nozzle according to claim 1, **characterised in that** said at least one fixed resilient stud comprises two fixed resilient studs (40), and said at least one moving resilient stud comprises one moving resilient stud (41) positioned in a circumferential direction (400) of the nozzle between the two fixed resilient studs.

3. A steerable nozzle according to claim 2, **characterised in that** the rigid piece (42) is V-shaped, the tip of the V-shape being fixed to the moving resilient stud (41) and the other two ends of the V-shape being fixed to respective ones of the fixed resilient studs (40).

4. A steerable nozzle according to claim 1, **characterised in that** said at least one moving resilient stud comprises two moving resilient studs (41a), and said at least one fixed resilient stud comprises one fixed resilient stud (40a) positioned in a circumferential direction (400) of the nozzle between the two moving resilient studs.

5. A steerable nozzle according to claim 4, **characterised in that** the rigid piece (42a) is V-shaped, the tip of the V-shape being fixed to the fixed resilient stud (40a) and the other two ends of the V-shape being fixed to respective ones of the moving resilient studs (41 a).

6. A steerable nozzle according to any one of claims 1 to 5, **characterised in that** said at least one fixed resilient stud (40) and said at least one moving resilient stud (41) are made of a laminated material.

7. A steerable nozzle according to claim 6, **characterised in that** the laminated material is constituted by a stack of alternating layers of elastomer and of metal.

8. A steerable nozzle according to claim 6, **characterised in that** the laminated material is constituted by a stack of alternating layers of elastomer and of an organic composite material.

9. A steerable nozzle according to claim 6, **characterised in that** the laminated material is constituted by a stack of alternating layers of elastomer and of a thermostructural material.

10. A steerable nozzle according to any one of claims 7 to 9, **characterised in that** the elastomer is selected from elastomers capable of withstanding temperatures greater than 150°C.

11. A steerable nozzle according to claim 10, **characterised in that** the elastomer is selected from fluorocarbon and fluorosilicone materials, and from hydrogenated elastomers.

12. A steerable nozzle according to any one of claims 1 to 11, **characterised in that** the moving portion (2) is hinged to the fixed portion (1) by means (161, 210, 151, 200) defining a centre of rotation.

13. A steerable nozzle according to claim 12, **characterised in that** the means defining a centre of rotation comprise a fixed spherical bearing surface (161) and a moving spherical bearing surface (210) that is slidable over the fixed spherical bearing surface, and **in that** the moving spherical bearing surface is connected to the control means (3).

14. A steerable nozzle according to claim 13, **characterised in that** the first end of said at least one fixed resilient stud (40) is fixed to the fixed spherical bearing surface (161), and the first end of said at least one moving resilient stud (41) is fixed to the moving spherical bearing surface (210).

15. A steerable nozzle according to claim 14, **characterised in that** each moving resilient stud (41) is fixed to a projection (213) of the moving spherical bearing surface (210), said projection being of a shape and a size enabling it to be interposed between two fixed resilient studs (40).

16. A steerable nozzle according to any one of claims 1 to 15, **characterised in that** the control means comprise actuators (3) which are preferably regularly distributed around the circumference of the nozzle.

17. A steerable nozzle according to any one of claims 1 to 16, **characterised in that** said resilient assemblies (4) are regularly distributed around the circumference of the nozzle.

18. A steerable nozzle according to any one of claims 1 to 17, **characterised in that** it further comprises steerable flaps (22) secured to the moving portion (2).
